# EUROPÄISCHE PATENTANMELDUNG

(11) **EP 1 953 101 A1**
(43) Veröffentlichungstag der Anmeldung: **06.08.2008**
(21) Anmeldenummer: 07001960.9
(22) Anmeldetag: 30.01.2007
(51) Int. Cl.: B65G 69/24, G07F 7/06

(54) **Gebindeabgabesystem**

(71) Anmelder: STAAKE Investment & Consulting GmbH & Co. KG, 38118 Braunschweig (DE)
(72) Erfinder: Staake, Alexandra, 38126 Braunschweig (DE)
(74) Vertreter: Stornebel, Kai

(57) **Zusammenfassung**

Die Erfindung betrifft ein Gebindeabgabesystem mit auf mehreren Ebenen und nebeneinander angeordneten Bereitstellungsbahnen (4), an deren Enden verfahrbar angetriebene Regalbediengeräten (20, 30) angeordnet sind, die mit einer Steuereinrichtung verbunden sind und in die Bereitstellungsbahnen (4) Gebinde (40) aus einer Übernahmestation (5) einstellen und aus den Bereitstellungsbahnen (4) Gebinde (40) auf Anforderung entnehmen und einer Ausgabestelle (8) zuführen. Eine Sensoreinrichtung (58) zur Erfassung der Körpergröße eines Kunden ist an dem Gebindeabgabesystem angeordnet. Ein in der Höhe einstellbarer Ausgabetisch (12), auf dem das Gebinde dem Kunden zugeführt wird, ist mit einer Steuereinheit gekoppelt, die in Abhängigkeit von den Sensordaten den Ausgabetisch (12) in der Höhe einstellt.

## Beschreibung

Die Erfindung betrifft ein Gebindeabgabesystem mit auf mehreren Ebenen und nebeneinander angeordneten Bereitstellungsbahnen, an deren Enden verfahrbar angetriebene Regalbediengeräte zu Bestückung und Entnahme von Gebinden angeordnet sind, die mit einer Steuereinrichtung verbunden sind und in die Bereitstellungsbahnen Gebinde aus einer Übernahmestation einstellen und aus den Bereitstellungsbahnen Gebinde auf Anforderung entnehmen und einer Ausgabestelle zuführen. Unter Gebinden sind neben einer Zusammenstellung mehrerer Einzelverpackungen wie flachen Schachteln, Tüten, Flaschenschachteln oder dergleichen, auch größere Einzelwaren wie Waschpulvererpackungen, Reinigungsmittel, Kartons, Dosen, Kanister oder dergleichen verstanden. Ebenfalls werden unter dem Begriff Gebinde Großpackungen, Waren einer bestimmten Größe und insbesondere Getränkeverpackungen, wie Getränkekisten oder Paletten mit Dosen oder Einwegflaschen sowie folienverschweißte Waren oder Warenzusammenstellungen verstanden. Grundsätzlich können auch andere Warengrößen mit dem vorhandenen System gehandhabt werden.

Aus der EP 590 646 B1 ist ein Getränketerminal zur automatischen Ausgabe von Getränkekästen bekannt, bei dem an einem Lieferterminal mit Getränkekästen beladene Paletten angeliefert werden. Diese Paletten werden in einem Hochregallager eingestellt und über ein Hochregal-Fahrzeug, das zur Bevorratung der Paletten in dem Hochregal dient, transportiert. Eine Vereinzelungseinrichtung nimmt die jeweiligen Getränkekästen von den Paletten und führt sie einem Verkaufslager zu, in welchem die einzelnen Getränkekästen bevorratet werden. Weiterhin ist eine Kundenkonsole vorgesehen, an der eine Getränkeausgabestelle vorhanden ist. Über eine zumindest eine Kunden-Fördereinrichtung zur Entnahme der Kästen aus dem Verkaufslager werden die Kästen an die Getränkeausgabestelle übergeben. Weiterhin ist der Kundenkonsole eine Leergutannahmestelle zugeordnet, in der das Leergut abgegeben werden kann. Mittels einer Kundenfördereinrichtung wird ein Leergutspeicher mit dem Leergut beschickt. Dem Leergutspeicher nachgeordnet ist eine Palettiereinrichtung, auf der die einzelnen Leergutkästen auf einer Palette angeordnet werden. Die Palettiereinrichtung ist mit dem Hochregal-Fahrzeug betriebsverbunden, so dass die vollen Leergutpaletten in das Hochregal eingestellt werden können.

Die EP 669 603 B1 betrifft ebenfalls ein Getränketerminal zur automatischen Ausgabe von Getränkekästen, wobei der Getränketerminal zumindest einen Lieferterminal für die Anlieferung von mit Getränkekästen beladenen Paletten, ein Palettenlager und ein Lagerfahrzeug für die Bevorratung von Paletten in dem Palettenlager sowie ein Verkaufslager zur Bevorratung der einzelnen Getränkekästen aufweist. Eine Getränkeausgabestelle ist vorgesehen, die mit einer Kundenkonsole versehen ist. Ein Kastentransportmittel dient zur Entnahme der Kästen aus dem Verkaufslager und zur Übergabe der Kästen an die Getränkeausgabestelle. Eine Vereinzelungseinrichtung zum Vereinzeln der Getränke ist vorgesehen, wobei das Verkaufslager für jede Getränkesorte zumindest ein angetriebenes Fördergerät aufweist. Das Fördergerät soll als Staurollenförderer ausgebildet sein, so dass in dem Verkaufslager für jede Getränkesorte ein eigener Antrieb vorhanden sein muss. Bei einem entsprechend gro-ßen Getränketerminal muss eine Vielzahl von angetriebenen Rollen in den jeweiligen Rollenbahnen vorhanden sein. Dies ist sehr kostenintensiv.

Aus der EP 727 078 B1 ist ein Getränketerminal zur automatischen Ausgabe von Getränkekästen mit einem Lieferterminal für mit Getränkekästen beladene Paletten, zumindest einem Hochregal, einer Vereinzelungseinrichtung, einer Bepalettierungseinrichtung, zumindest einem Verkaufslager, zumindest einer Kundenfördereinrichtung, zumindest einer in einer Kundenkonsole versehenden Getränkeausgabestelle und einer Vereinzelungseinrichtung bekannt, wobei die Vereinzelungseinrichtung und die Bepalettierungseinrichtung zumindest einen horizontal angeordneten Linearförderer umfassen, welcher eine Lagerfläche des Verkaufslagers zugeordnet ist und mit Greifmitteln zum Greifen und Heben/Senken von einzelnen Getränkekästen versehen ist. Es soll ein Getränketerminal zur automatischen Ausgabe von Getränkekisten bereitgestellt werden, bei dem eine vollautomatische Betriebsweise ohne jegliches Personal dem Kunden bei betriebssicherer und schnellerer Arbeitsweise eine Vielzahl von Getränkesorten angeboten werden können.

Gerade bei größeren oder schwereren Gebinden ist es für den Kunden schwierig, diese in einer physiologisch richtigen Art und Weise anzunehmen und umzusetzen, beispielsweise eine volle Getränkekiste in einen Kofferraum eines Fahrzeuges zu heben. Die höchsten Belastungen treten dabei im Rückenbereich auf, wenn in einer gebückten Haltung eine Umsetzbewegung durchgeführt wird.

Aufgabe der vorliegenden Erfindung ist es daher, ein Gebindeabgabesystem zu schaffen, das eine verbesserte Nutzerfreundlichkeit aufweist. Erfindungsgemäß wird diese Aufgabe durch ein Getränkeabgabesystem mit den Merkmalen des Anspruchs 1 gelöst. Vorteilhafte Ausgestaltungen der Erfindung sind in den Unteransprüchen aufgeführt.

Das erfindungsgemäße Gebindeabgabesystem mit auf mehreren Ebenen und nebeneinander angeordneten Bereitstellungsbahnen, an deren Enden verfahrbar angetriebene Regalbediengeräte zur Bestückung und Entnahme von Gebinden angeordnet sind, die mit einer Steuereinrichtung verbunden sind und in die Bereitstellungsbahnen Gebinde aus einer Übernahmestation einstellen und aus den Bereitstellungsbahnen Gebinde auf Anforderung entnehmen und einer Ausgabestelle zuführen, sieht vor, dass eine Sensoreinrichtung zur Erfassung der Körpergröße eines Kunden bevorzugt an der Ausgabestelle oder in der Nähe der Ausgabestelle angeordnet ist. Auf Grundlage der erfassten Körpergröße des Systemnutzers wird ein höhenverstellbarer Ausgabetisch, auf dem die Gebinde dem Kunden zugeführt werden, in Abhängigkeit von den Sensordaten verstellt. Dabei werden die Sensordaten an eine Steuereinrichtung übermittelt, in der bevorzugt Vergleichsdaten abgelegt sind, in welcher physiologisch günstigen Höhe das Gebinde bereitgestellt werden soll. Durch die größenabhängige Einstellbarkeit des motorisch in der Höhe verstellbaren Ausgabetisches ist es möglich, das Gebinde in der für den Nutzer optimalen Höhe bereitzustellen. Aufgrund der motorischen Höhenverstellbarkeit des Ausgabetisches ist es möglich, auch eine Anpassung der Ausgabe in Abhängigkeit von der Höhe und Beschaffenheit des ausgegebenen Gebindes vorzunehmen. Werden flache Gebinde, beispielsweise eine Palette Dosen, auf dem Ausgabetisch dem Nutzer zugeführt, kann der Ausgabetisch höher verfahren werden als bei einer Getränkekiste, die in der Regel am oberen Rand an den dafür vorgesehenen Griffelementen gegriffen und transportiert wird.

Die Sensoreinrichtung zur Erfassung der Körpergröße des Nutzers ist bevorzugt als ein Ultraschallsensor ausgebildet, alternativ kann eine Erfassung der Körpergröße in der Nähe der Ausgabestelle auch über andere geeignete Sensoreinrichtungen erfolgen. Die Festlegung, auf welche Ausgabehöhe der Ausgabetisch verfahren wird, kann entweder einmalig erfolgen, beispielsweise nach dem Aktivieren des Gebindeabgabesystems, oder iterativ überprüft werden, z. B. jedes Mal, wenn ein Gebinde entnommen wurde. Für den Fall, dass das Gebindeabgabesystem von zwei oder mehreren Personen gleichzeitig benutzt wird, kann dann die Höheneinstellung auf die jeweilige Körpergröße nachgeregelt werden.

Um das Bereitstellen der Gebinde zu erleichtern, ist der Ausgabetisch längsverschieblich angetrieben gelagert, so dass die Gebinde aus dem Gebindeabgabesystem, beispielsweise einem Gehäuse oder einer Gebäudewand, herausgeführt werden und dem Nutzer zur Verfügung gestellt werden. Dabei kann der Ausgabetisch in Längsrichtung teleskopierbar ausgebildet sein, beispielsweise über Rollenbahnen oder Gleitbahnen, die verschieblich aneinander geführt gelagert sind.

Der Ausgabetisch selbst kann einfach über einen Scherenmechanismus höhenverstellbar sein. Alternativ kann eine andere Art und Weise des motorischen Antriebes zur Höhenverstellung vorgesehen sein, beispielsweise über Verstellspindeln oder über eine Hydrauliklösung.

Um ein Nachrutschen nachfolgender Gebinde bei Entnahme des vorderen Gebindes zu erleichtern, ist der Ausgabetisch in Ausgaberichtung geneigt, vorzugsweise ist der Ausgabetisch in seiner Neigung einstellbar, wobei der Grad der Einstellung von dem Gebinde bzw. den Gebinden und der Konstruktion des Ausgabetisches abhängt. Werden Rollenbahnen verwendet, muss die Neigung nicht so groß wie bei Gleitbahnen mit Winkelblechen sein.

Bevorzugt ist das Gebindeabgabesystem in einem Gebäude angeordnet, so dass die Technik der Bevorratung und zur Verfügungstellung der Gebinde geschützt ist. In dem Gebäude selbst ist eine Nische ausgebildet, in der die Ausgabestelle angeordnet ist. Die Ausgabestelle sieht dabei eine Durchtrittsöffnung des Ausgabetisches durch die Wandung oder des Gehäuses vor. Durch die Anordnung einer Nische und der Ausgabestelle innerhalb der Nische wird eine Zuordnung des jeweiligen Kunden oder Nutzers zu der jeweiligen Ausgabestelle erleichtert, da die Höhenerfassung sich zufällig in der Nähe der Sensoreinrichtung aufhaltenden Personen dadurch weitestgehend ausgeschlossen wird. Ebenfalls kann in der Nische ein Bedienteil angeordnet sein, über das die Bestellung sowie Bezahlung abgewickelt wird, beispielsweise über einen menügesteuerten Touchscreen. Die Nische kann über eine Absperrvorrichtung, insbesondere ein Roll- oder Schiebetor verschlossen sein, das erst nach Initialisierung des Systems oder Übermittlung eines Bestellauftrages verfährt und die Ausgabestelle freigibt. Zusätzlich zu der Sensoreinrichtung zur Erfassung der Körpergröße, die bevorzugt innerhalb der Nische angeordnet ist, kann eine weitere Sensoreinheit zur Erfassung der Anwesenheit einer Person oder eines Gegenstandes in der Nische oder im Verfahrweg der Absperrvorrichtung angeordnet sein, um zu verhindern, dass beim Schließen der Absperrvorrichtung eine Person oder ein Gegenstand eingeklemmt wird.

Zur Vermeidung eines unbefugten Eindringens in das System ist eine Schleuseneinrichtung dem Ausgabetisch zugeordnet, die das Gebäude gegen ein unbefugtes Eindringen sichert. Dazu ist insbesondere ein Verschlussschwert an der Durchtrittsöffnung für den Ausgabetisch durch das Gebäude vorgesehen. Im Gebäudeinneren kann der Ausgabetisch bei einem geöffneten Verschlussschwert in einem Käfig oder einem Kompartement abgekapselt sein, das sich nach innen nur dann öffnen lässt, wenn das Verschlussschwert wieder geschlossen ist. Ebenfalls kann eine Sensoreinrichtung die Anwesenheit einer Person auf dem Ausgabetisch detektieren und ein weiteres Eindringen in das Systems verhindern.

Das Regalbediengerät zur Entnahme der Gebinde aus den Bereitstellungsbahnen liefert die ausgewählten Gebinde an den Ausgabetisch, ggf. über eine zwischengeschaltete Transporteinheit, wobei dem Ausgabetisch ein Pufferspeicher vorgeordnet sein kann, auf dem das Regalbediengerät die gewünschten Gebinde vorkommissioniert. Aus dem Pufferspeicher wird das Gebinde dann auf den Ausgabetisch verfahren.

Die Regalbediengeräte sind bevorzugt zur Aufnahme mehrerer Gebinde eingerichtet, ebenso wie der Ausgabetisch, so dass mehrere Gebinde gleichzeitig an die Ausgabestelle verbracht werden können.

Insbesondere für Getränke ist eine Annahmeeinrichtung für Rückgabegebinde vorgesehen, von der aus die Gebinde mit einer Transporteinrichtung über die Entnahmevorrichtung in eine Sammel- oder Entsorgungsstation eingestellt oder entsorgt werden.

Nachfolgend wird ein Ausführungsbeispiel der Erfindung anhand der beigefügten Figuren näher erläutert. Es zeigen:
- Figur 1 -: eine Gesamtansicht einer ersten Variante eines Gebindeabgabesystems;
- Figur 2 -: eine Gesamtansicht einer zweiten Variante eines Gebindeabgabesystems;
- Figur 3 -: eine Teildarstellung des Gebindeabgabesystems;
- Figur 4 -: eine vergrößerte Detaildarstellung einer Ausgabestalle;
- Figur 5 -: eine Schnittdarstellung durch das Gebindeabgabesystem;
- Figur 6 -: eine Detaildarstellung der Ausgabestelle in Frontalansicht; sowie
- Figur 7 -: eine Detaildarstellung eines Ausgabetisches.

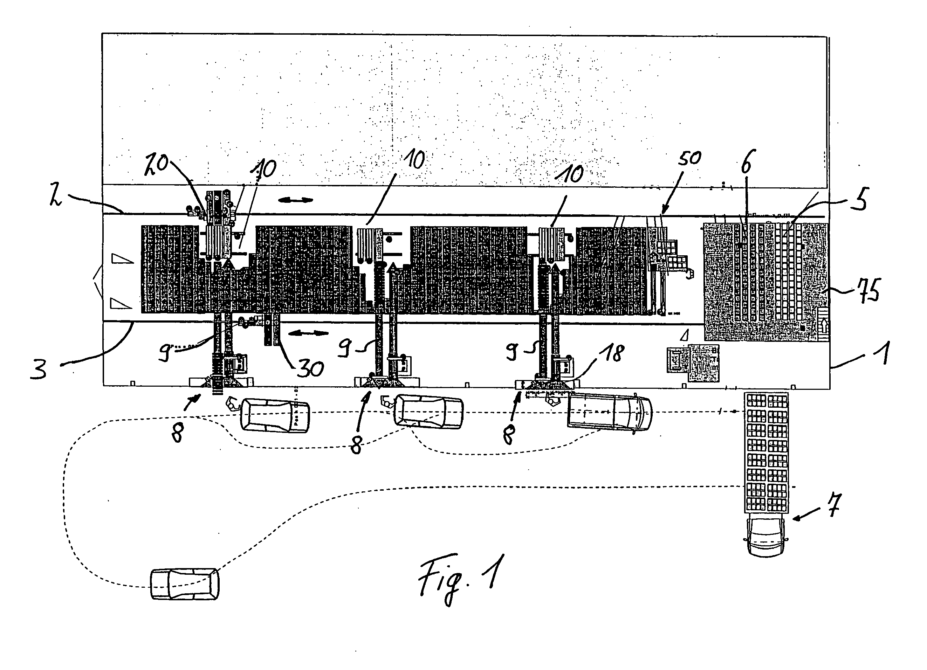

Figur 1 zeigt ein Gebindeabgabesystem mit einem Gebäude 1, in dem auf Verfahrbahnen 2, 3 Regalbediengeräte 20, 30 zur Entnahme und Bestückung von Bereitstellungsbahnen 4 verfahrbar angeordnet sind. Die Entnahme- und Bestückungsvorrichtungen 20, 30 sind in drei Richtungen verfahrbar und können somit entlang der nebeneinander und übereinander angeordneten Bereitstellungsbahnen 4 verfahren werden. Die jeweiligen Bereitstellungsbahnen 4 können selektiv von den Regalbediengeräten 20, 30 angefahren werden. Ebenfalls sind in dem Gebäude Ausgabestellen 8 ausgebildet, an denen Kunden bevorzugt mit Kraftfahrzeugen parken können, um die bestellten und den Ausgabestellen 8 zugeführten Gebinde aus einer nicht dargestellten Entnahmeöffnung 38 entnehmen zu können. Bis auf die Entnahmeöffnung 38 ist das Gebäude 1 im Normalbetrieb verschlossen. Eine Bestellung kann entweder über das Internet oder an der Ausgabestelle 8 an einem entsprechenden Terminal abgegeben werden.

Zur Beschickung des Gebindeabgabesystems fahren Belieferungsfahrzeuge 7, vorliegend Lastkraftwagen, an eine Ankoppelungsstation 75 an, wobei sowohl in dem Belieferungsfahrzeug 7 als auch in einem Vollgutspeicher 5 Speicherbahnen 71, 51 vorgesehen sind, in denen die Gebinde einstellbar sind. Die Speicherbahnen 51 des Vollgutspeichers 5 können Antriebe aufweisen oder nur passiv als Roll- oder Gleitbahnen ausgebildet sein und nehmen die Gebinde von den Gleit- oder Rollbahnen 71 aus dem Belieferungsfahrzeug 7 auf. Dadurch ist es möglich, in kürzester Zeit sämtliche Gebinde des Belieferungsfahrzeuges 7 in das Gebindeabgabesystem einzuschleusen. Dazu sind die Speicherbahnen 51 des Vollgutspeichers 5 so ausgebildet, dass ein voll beladenes Belieferungsfahrzeug 7 vollständig entleerbar ist.

Neben dem Vollgutspeicher 5 ist ein Leergutspeicher 6 mit Speicherbahnen 61 vorgesehen, in die zurückgegebene Gebinde oder Leergut einstellbar sind. Die Entsorgung erfolgt umgekehrt zu der Bestückung des Vollgutspeichers 5, indem die vollen Speicherbahnen 61 des Leergutspeichers 6 zu den leeren Speicherbahnen 71 des Entsorgungsfahrzeuges 7 ausgerichtet werden, beispielsweise durch Umsetzen des Fahrzeuges oder ein Verfahren der Speicherbahnen 61. Die Gebinde werden dann beispielsweise über die Antriebe oder Schubeinrichtungen von den Speicherbahnen 61 des Leergutspeichers in die Speicherbahnen 71 des Fahrzeuges 7 eingestellt. Alternativ können die Vollgebinde und die Leergebinde auch in verfahrbaren Containern oder Regalstrukturen angeliefert und abgeholt werden, wobei die Entnahme und Bestückung in der dargestellten Ausführungsform durch das Regalbediengerät 20 erfolgt. Bei einem anderen Layout könne beide Regalbediengeräte 20, 30 zur Beschickung des Leergutspeichers 6 oder zur Entladung des Vollgutspeichers 5 eingesetzt werden.

Die Ankoppelungsstation 75 sowohl zum Beschicken als auch zum Entsorgen ist durch Tore, insbesondere Rolltore, verschlossen.

Zur Entnahme eines Gebindes wird ein Regalbediengerät 20 entlang der Verfahrbahnen 2 zu der gewünschten Bereitstellungsbahn 4 verfahren. Nach Kopplung des Regalbediengerätes 20 mit der jeweiligen Bereitstellungsbahn 4 wird ein Gebinde aufgeladen und anschließend eine weitere Bereitstellungsbahn 4 angefahren, in der gegebenenfalls das weitere gewünschte Gebinde gelagert ist. Nach Beendigung der Zusammenstellung der Gebinde verfährt das Regalbediengerät 20 bis zu einem Pufferspeicher 10, in dem die Gebinde für eine Ausgabestelle 8 vorkommissioniert werden. Über eine Transporteinrichtung 9, beispielsweise ein teleskopierbarer Träger, werden die Gebinde dann zu der jeweiligen Ausgabestelle 8 transportiert und an einen Ausgabetisch geleitet. Alternativ kann die Transporteinrichtung auch als Rollenbahn mit Übergabeeinrichtungen, Gleitbahn oder dergleichen ausgebildet sein, die zu einer Ausgabestelle 8 führt. Von dem Regalbediengerät 20 werden die jeweils zusammengestellten und im Pufferspeicher 10 abgelegten Gebinde auf die Transporteinrichtung 9 geschleust, mit der sie zu der Ausgabestelle 8 gefördert werden. Alternativ zu einer Anordnung der Gebinde in einem Pufferspeicher kann ein Transport von dem Regalbediengerät 20 auch unmittelbar zu der Ausgabestelle 8 erfolgen, die das Gebinde bis zu der Ausgabestelle 8 verfährt. Die Transporteinrichtung 9 kann Teil des Pufferspeichers 10, eine separate Komponente oder Teil des Ausgabetisches 12 sein.

Während das zweite Regalbediengerät 30 beispielsweise dafür sorgt, dass die Gebinde in den Bereitstellungsbahnen 4 immer in Richtung des ersten Regalbediengerätes 20 vorgeschoben sind, kann eine Bestückung der Bereitstellungsbahnen 4 auch durch das zweite Regalbediengerät 30 erfolgen, das Vollgebinde beispielsweise aus einem Transferbereich 50 erhält. Hier können die Gebinde erfasst, in das Steuerungssystem aufgenommen und den jeweiligen Bereitstellungsbahnen 4 zugeordnet werden. Es kann auch eine direkte Übergabe von dem ersten zu dem zweiten Regalbediengerät 20, 30 erfolgen.

Bei einer direkten Entnahme durch das zweite Regalbediengerät 30 kann bei der dargestellten Anordnung auch ein unmittelbarer Transport über das zweite Regalbediengerät 30 zu der Ausgabestelle 8 erfolgen, während das erste Regalbediengerät 20 die Bestückung der Bereitstellungsbahnen 4 übernimmt. Das zweite Regalbediengerät 30 kann die Gebinde unmittelbar ausgeben oder auf einen Ausgabetisch 12 umsetzen. Eine Entsorgung von Rückgebinden erfolgt dann über eine Annahmeeinrichtung 18, die mit der Transporteinrichtung 9 gekoppelt ist oder durch sie ausgebildet sein kann, indem die Transportrichtung umgekehrt wird.

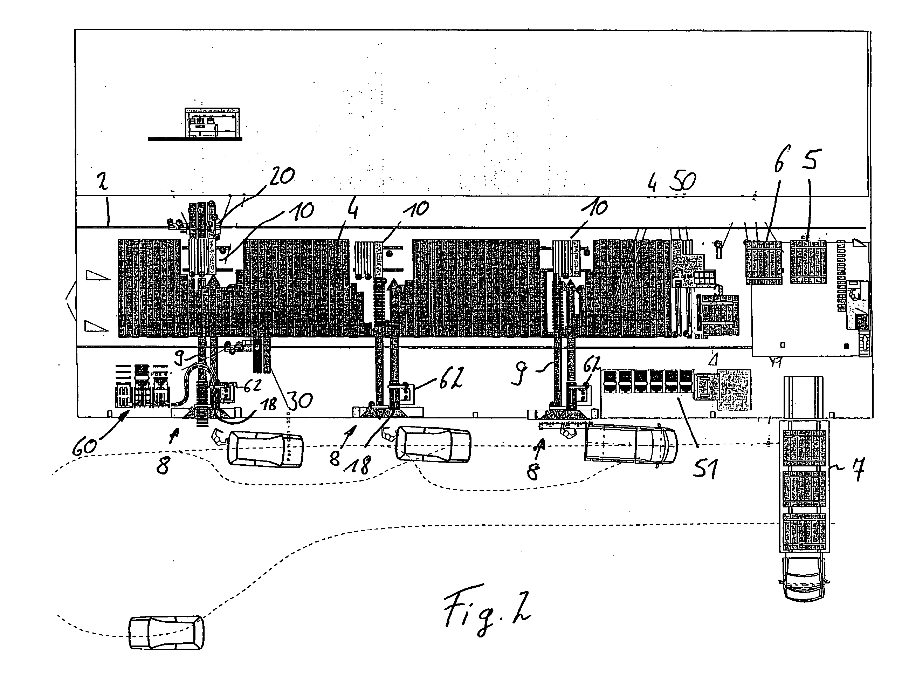

In der Figur 2 ist eine Variante des Gebindeabgabesystems der Figur 1 dargestellt, bei der vollautomatisiert eine Abgabe von Vollgut oder Vollgebinden an die Ausgabestellen 8 erfolgt. Ebenfalls ist eine Annahmeeinrichtung 18 für Rückgebinde, beispielsweise Pfandflaschen oder leere Getränkekästen vorgesehen, die dann über die Annahmeeinrichtung 18 z.B. über ein Förderband zu dem Regalbediengerät 20, ggf. über den Pufferspeicher 10, zurückgefördert werden. Von dem Regalbediengerät 20 können dann die zurückgegebenen Gebinde oder leeren Kästen, wie in der Figur 2 angedeutet, zu dem Leergutspeicher 6 verfahren und dort in die Speicherbahnen 61 oder Container eingestellt werden. Ebenfalls kann eine Sammlung der Rückgabegebinde auch über das zweite Regalbediengerät 30 erfolgen, das die Rückgabegebinde zu einer Sammelstation 51 fördert.

In der Figur 2 ist neben der linken Ausgabestelle 8 eine Sortiereinrichtung 60 angeordnet, die von der Annahmeeinrichtung 18 aufgenommene Pfandgebinde oder dergleichen sortiert und automatisch in Aufbewahrungselemente einordnet. Beispielsweise können so Pfandflaschen sortiert in leere Getränkekästen eingestellt und anschließend von dem Regalbediengerät 30 zu der Transferstation 50 oder der Sammelstation 51 verfahren werden. Alternativ kann der Rücktransport über den Pufferspeicher 10 und das erste Regalbediengerät 20 zu dem Leergutspeicher 6 erfolgen.

An der mittleren Ausgabestelle 8 ist ebenfalls eine Annahmeeinrichtung 18 angeordnet, die beispielsweise für PET- Flaschen ausgebildet ist. In der Annahmeeinrichtung 18 werden die eingeführten PET-Flaschen gescannt, ggf. auszuzahlendes Pfand erfasst, dem Kunden gutgeschrieben und die PET-Flasche einer Transporteinheit 62, beispielsweise einem Container 62 zugeführt. Dabei kann die PET-Flasche vollständig oder zerkleinert dem Container 62 zugeführt werden. Ist der Container 62 voll, kann er über das zweite Regalbediengerät 30 zu der Sammelstation 51 verbracht werden, wo der Container 62 bevorzugt entleert und der Inhalt in einen größeren Aufbewahrungscontainer gelagert wird, bis er über ein Entsorgungsfahrzeug aus dem Gebindeabgabesystem ausgeschleust wird. Eine solche PET-Flaschen-Rücknahme ist an allen Ausgabestellen 8 vorgesehen. Der Containerwechsel kann automatisiert erfolgen.

In den Figuren 1 und 2 sind die Abgabestellen 8 nur an einer Seite des Gebäudes 1 eingezeichnet, grundsätzlich können diese Abgabestellen 8 auch auf der anderen Seite des Gebäudes 1 vorhanden sein. Ebenfalls können die Bereitstellungsbahnen 4 beiderseits der dann mittigen Verfahrbahn 2 des Regalbediengerätes 20 angeordnet sein.

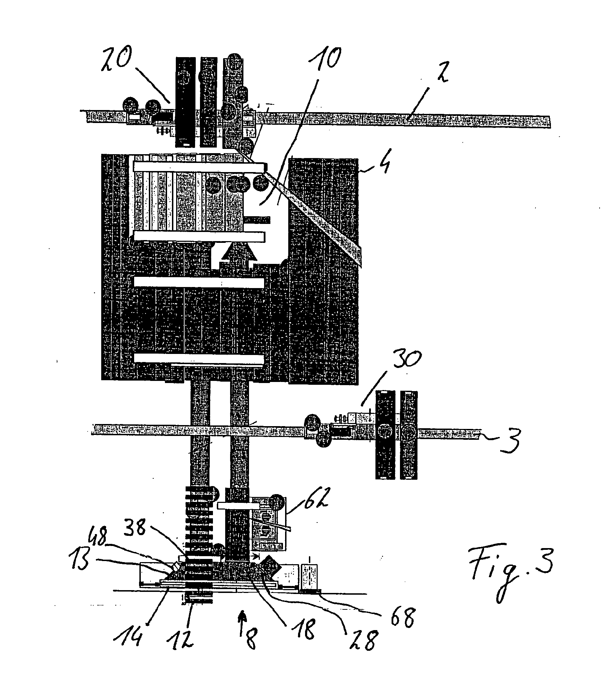

In der Figur 3 ist eine Detaildarstellung des Gebindeabgabesystems mit einer Ausgabestelle 8, den beiden Regalbediengeräte 20, 30 sowie dem Pufferspeicher 10 dargestellt. Die Bereitstellungsbahnen 4 sind nebeneinander und übereinander angeordnet, der Pufferspeicher 10 ist dabei unterhalb der unteren Reihe von Bereitstellungsbahnen 4 angeordnet und wird von dem ersten Regalbediengerät 20, das horizontal und vertikal verfahrbar gelagert ist, mit Gebinden versorgt, die aus den jeweiligen Bereitstellungsbahnen 4 entnommen werden. Zur besseren Erkennbarkeit des Pufferspeichers 10 ist ein Teil der Bereitstellungsbahnen 4 freigeschnitten.

Von den Pufferspeicher 10 wird die Gebindezusammenstellung über die Transporteinrichtung 9 oder das zweite Regalbediengerät 30 aufgenommen und an die Ausgabestelle 8 verfahren. Dort kann die Gebindezusammenstellung auf einen Ausgabetisch 12 übergeben werden, der aus der Ausgabestelle 8 im Bereich einer Durchtritts- oder Entnahmeöffnung 38 durch die Gebäudewandung durchtritt und das Gebinde einem außerhalb des Gebäudes 1 stehenden Nutzers darbietet. Der Ausgabetisch 12 ist, wie später näher erläutert wird, höheneinstellbar und längsverschieblich gelagert und kann nach der Beschickung durch die Transporteinrichtung 9 oder das Regelbediengerät 30 durch eine verschließbaren Tunnel in einen gesicherten Bereich unmittelbar hinter der Durchtrittsöffnung 38 verfahren. Dieser gesicherte Bereich kann mit einem Gitterkäfig umschlossen sein, so dass nach dem Einfahren des Ausgabetisches 12 in diesen Bereich und dem Verschließen der Tunnelöffnung oder der Unzugänglichmachung der Tunnelöffnung ein unbefugtes Eindringen durch die Entnahmeöffnung 38 in das Gebäude 1 unmöglich gemacht wird.

Sowohl die Annahmeeinrichtung 18 als auch die Durchgangsöffnung 38 sind in einer Nische 13 innerhalb der Gebäudewandung angeordnet. Ebenfalls ist dort ein Bedienterminal 28 sowie eine Anwesenheitssensor 48 angeordnet, um in der Nische 13 befindliche Personen oder Gegenstände zu erfassen. Dieser Anwesenheitssensor 48 ist mit einer Absperrvorrichtung 14 in Gestalt eines Rolltores 14 oder eines Schiebetores verschlossen, das erst nach Aktivierung über eine Aktivierungseinheit 68, die außerhalb der Nische 13 angeordnet ist, beispielsweise über das Einführen einer Kredit- oder Kundenkarte, auffährt. Die Bereitstellungsbahnen 4 können unterschiedlich breit ausgestaltet sein, um unterschiedlich breite Gebinde aufnehmen zu können. Durch den Verzicht auf eine Einheitsbreite wird eine bessere Raumausnutzung gewährleistet. Neben einer einfachen Ausgestaltung der Bereitstellungsbahnen 4 als Winkelbleche, die an ihren horizontal ausgerichteten Tragwinkeln zueinander beabstandet sind, so dass Förder- oder Greifelemente von unten die Gebinde aufnehmen können, können auch Rollenbahnen oder Förderbahnen vorgesehen sein, die an das jeweilige Gebinde angepasst sind.

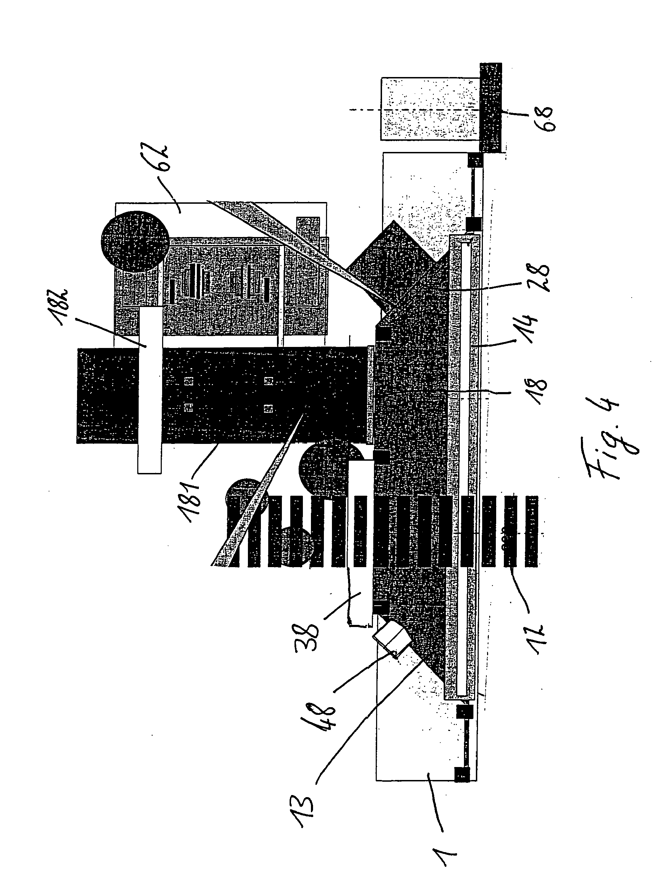

In der Figur 4 ist die Ausgabestelle 8 in vergrößerter Darstellung im Detail gezeigt. Hier ist deutlich zu erkennen, dass der Ausgabetisch 12 längsverschieblich ausfahrbar ausgestaltet ist und in der dargestellten Position bis jenseits der Absperrvorrichtung 14 in Gestalt eines Rolltores verfahrbar ist. Sowohl das Bedienteil 28 in Gestalt eines Touchsreens als auch die Annahmeeinrichtung 18, der Durchgangsöffnung 38, die durch ein separates Verschlussschwert zusätzlich verschlossen werden kann, wenn der Ausgabetisch innerhalb des Gebäudes zurückgefahren ist, als auch der Sensor 48 zum Scannen der Nische 13 sind hinter dem Roll- oder Schiebetor 14 innerhalb der Nische 13 in der Wandung 1 angeordnet. Hinter der Annahmeeinrichtung 18 ist eine Scanneinrichtung 181 zum Erkennen der zurückgegebenen Gebinde und ggf. dem Verbuchen eines Pfandguthabens vorgesehen. Über eine Transfereinrichtung 182, der eine Zerkleinerungseinheit vorgeschaltet werden kann, wird das zurückgegebene Gebinde einen mobilen Container 62 geleitet und dort ggf. kompaktiert. Eine solche Kompaktierung kann auch ohne ein Pfandsystem erfolgen, falls eine Rücknahmeverpflichtung für Verpackungen oder dergleichen erfüllt werden muss.

Wird nach Aufforderung durch einen Kunden an der Aktivierungseinheit 68 die Absperrvorrichtung 14 verfahren und der Zutritt zu der Nische 13 freigegeben, gibt ein Kunde am Bedienterminal 28 seine Bestellung auf. Anschließend kann vorhandenes Rückgabegut der Annahmeeinrichtung 18 zugeführt werden. Währenddessen kommissioniert das Regalbediengerät 20 die Bestellung, legt sie im Pufferspeicher 10 ab und wird über das zweite Regalbediengerät 30 zur Übergabe an den Ausgabetisch 12 verfahren. Das nicht dargestellte Verschlussschwert öffnet sich und gibt die Entnahmeöffnung 38 frei, wodurch der Ausgabetisch 12 längsverschieblich durch die Entnahmeöffnung 38 hindurch in die Nische 13 und darüber hinaus verfahren werden kann. Die Ausgabe des jeweiligen Gebindes erfolgt erst nach erfolgter Bezahlung bzw. Abbuchung des entsprechenden Betrages oder Verrechnung des Pfandbetrages im Rahmen eines elektronischen Zahlungsverkehrs. Der Ausgabetisch 12 ist dabei auf eine dem annehmenden Kunden angepasste Höhe eingestellt worden, was später näher erläutert wird. Nach Herausfahren des Ausgabetisches 12 und dem Bereitstellen der Gebinde auf dem Ausgabetisch 12 kann das jeweilige Gebinde leicht in das Transportmittel, insbesondere Fahrzeug, umgesetzt werden.

Um eine Kollision mit dem Kunden bzw. Fahrzeugen zu vermeiden, wird im Vorfeld des Ausfahrens des Ausgabetisches 12 über den Sensor 48 geprüft, ob der Fahrweg frei von Hindernissen ist. Ebenso wird über den Sensor 48 bei einem Schließen der Ausgabestelle 8, also beim Zurückfahren des Ausgabetisches 12, einem Verschlie-ßen der Entnahmeöffnung 38 durch ein Verschlussschwert sowie dem Schließen der Absperrvorrichtung 48 geprüft, ob sich Gegenstände oder Personen innerhalb der Nische 13 oder innerhalb des Verfahrweges der Absperrvorrichtung 14 befinden. Ist dies der Fall, wird der Verfahrbewegung unterbrochen.

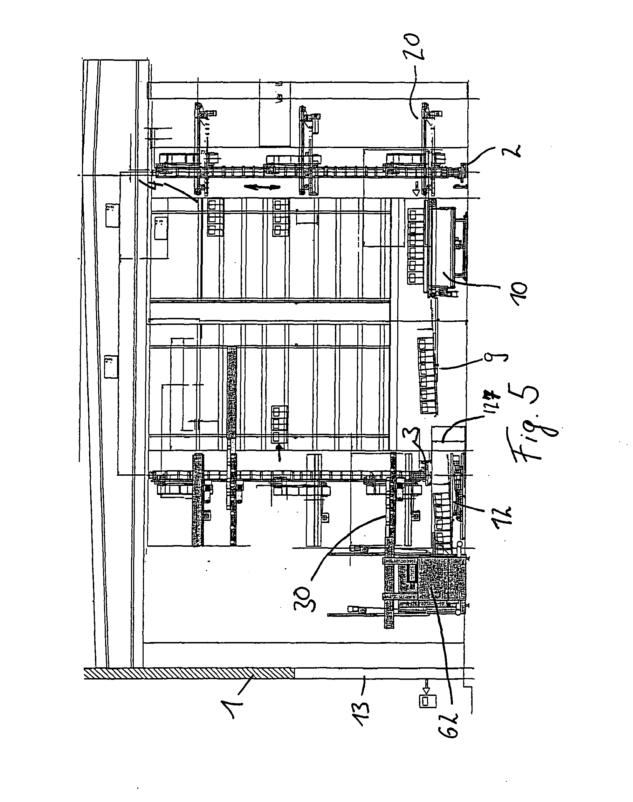

In der Figur 5 ist in Schnittdarstellung das Prinzip des Gebindeabgabesystems gezeigt. Mittig zwischen zwei Regalbediengeräten 20, 30 sind die Bereitstellungsbahnen 4 übereinander und nebeneinander angeordnet. Unterhalb der untersten Ebene der Bereitstellungsbahnen 4 ist ein Pufferspeicher 10 mit einer Transporteinrichtung 9 für die kommisionierten Gebinde angeordnet. Die Gebinde werden von der Bereitstellungsbahnen 4 auf das erste Regalbediengerät 20 verfahren, entweder draufgeschoben oder über einen ankoppelbaren Antrieb beispielsweise über Rollenketten oder dergleichen auf das Regalbediengerät 20 auftransportiert. Eine Bestückung der Bereitstellungsbahnen 4 erfolgt über das zweite Regalbediengerät 30, das, wie durch den Pfeil angedeutet, Gebinde in die Bereitstellungsbahnen 4 einschiebt und ggf. es zu einer möglichen Übergabestelle an das erste Regalbediengerät 20 verschiebt. Dies kann über teleskopierbare Ausleger oder dergleichen geschehen. Ebenfalls sind angetrieben Rollenbahnen oder dergleichen möglich.

Nach der Bestückung des Pufferspeichers 10 wird die kommissionierte Bestellung über die Transporteinrichtung 9, beispielsweise eine Gleit- oder Rollenbahn oder ein teleskopierbarer Ausleger, an den Ausgabetisch 12 übergeben, der in seiner tiefsten Stellung durch einen Tunneldurchgang 127 hindurch fährt bzw. auf ein Niveau abgesenkt werden kann, auf dem die Gebinde durch den Tunneldurchgang 127 durchtreten können. Der Tunneldurchgang 127 kann nach dem Durchgang der Gebinde durch ein Tor verschlossen werden.

Der Ausgabetisch 12 befindet sich dann innerhalb eines abgesperrten Raumes innerhalb des Gebäudes 1, so dass ein unbefugter Zutritt und eine Manipulation an der darin befindlichen Technik ausgeschlossen sind. Der Ausgabetisch 12 verfährt dann auf eine von einem Steuergerät übermittelte, vorgegebene Höhe und tritt dann durch die nicht dargestellte Entnahmeöffnung 38 aus.

Der Figur 5 ist ebenfalls die Anordnung des Containers 62 hinter der Gebäudewandung hinter der Nische 13 zu entnehmen. Der Container 62 ist über das Regalbediengerät 30 von der Annahmeeinrichtung 18 abkoppelbar und kann zu der Sammelstation 51 verfahren werden. Dort kann der Container 62 geleert und anschließend zurück zu der Annahmeeinrichtung 18 gebracht werden, wo das Rückgabegut aufgenommen wird.

Es ist ebenfalls möglich, mehrere Transporteinrichtungen 9 vorzusehen, die auf unterschiedlichen Höhen angeordnet sein können, um das niedrige Niveau des Ausgabetisches 12 zu erreichen. Die Transporteinrichtung 9 kann angetrieben oder als eine schräge Rollenbahn oder Gleitbahn ausgebildet sein.

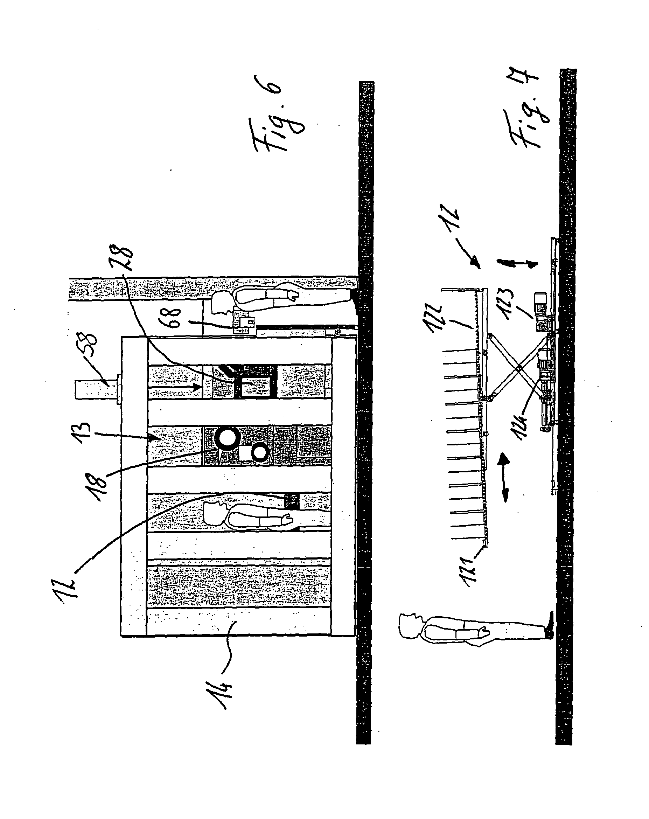

In der Figur 6 ist schematisch eine Ausgabestelle 8 mit einem noch geschlossenen Tor 14 vor der Nische 13 dargestellt. Zur Initialisierung des Systems wird die Aktivierungseinheit 68 durch Einführen einer Identifizierungskarte, beispielsweise einer Kreditkarte oder dergleichen, verfahren, beispielsweise nach links, und gibt die Nische 13 der Ausgabestelle 8 frei. Damit sind auch das Bedienterminal 28, die Annahmeeinrichtung 18 sowie die Durchtrittsöffnung für den Ausgabetisch 12 zugänglich. Oberhalb des Bedienterminals 28 ist ein Sensor 58 zur Erfassung der Körpergröße des Kunden angeordnet, insbesondere ein Ultraschallsensor. Gibt der Kunde eine Bestellung im Bedienterminal 28 auf oder führt er Leergut in die Annahmeeinrichtung 18 ein, wird die Körpergröße des Kunden erfasst. Über eine Steuereinrichtung, in der auf Grundlage der ermittelten Körpergröße eine optimale Entnahmehöhe der jeweiligen Gebinde errechnet wird, wird die Höhe des Ausgabetisches 12 an die Körpergröße des Kunden angepasst, ggf. unter Berücksichtigung der Griffhöhe des jeweiligen Gebindes. Der Kunde kann die zum Teil schweren Gebinde mit nahezu aufrechtem Körper annehmen und zu seinem Fahrzeug bringen, vorteilhafterweise ist das Fahrzeug in unmittelbarer Nähe zu dem Ausgabetisch 12 geparkt. Die Ausfahrtiefe des Ausgabetisches 12 kann dabei variiert werden, wobei eine Sensoreinrichtung, insbesondere die Sensoreinrichtung 48, überprüft, ob in dem Verfahrweg des Ausgabetisches 12 ein Hindernis in Gestalt eines Fahrzeuges oder dergleichen befindlich angeordnet ist.

In der Figur 7 ist der Ausgabetisch 12 mit darauf befindlichen Gebinden dargestellt. Mehrere Gebinde können auf dem Ausgabetisch 12 angeordnet sein. An dem vorderen Ende des Ausgabetisches 12 ist ein Anschlag 121 angeordnet, der ein Herunterfallen der Gebinde vermeidet. Der Ausgabetisch 12 weist eine leichte Neigung nach vorne auf, so dass die jeweiligen Gebinde selbständig nachrutschen. Der Ausgabetisch 12 kann eine Rollbahn 122 aufweisen. Ebenfalls kann der Ausgabetisch 12 teleskopierbar ausgestaltet sein, um durch die Durchtrittsöffnung 38 innerhalb des Gebäudes 1 hindurchzutreten. Der Tisch selbst kann motorisch längsverschieblich über einen Motor 123 angetrieben sein, um die horizontale Bewegung ausführen zu können. Ebenfalls ist ein Motor 124 vorgesehen, der über eine Spindel mit einem Scherenmechanismus zusammenwirkt, und den Ausgabetisch 12 in der Höhe verstellt. Die Motoren 123, 124 sind als Elektromotoren ausgebildet. Durch die Ausgestaltung des Scherenmechanismusses kann der Ausgabetisch 12 beziehungsweise die Rollbahn 122 oder die Gleitbahn in der Neigung eingestellt werden. Die Neigungseinstellung kann auch über einen separaten Antrieb erfolgen.

Das erfindungsgemäße Gebindeabgabesystem kann vollständig ohne Personal betrieben werden. Die Anlieferung kommissionierter Waren in Einzelgebinden erfolgt über Lkw. Die Übergabe in das Gebindeabgabesystem erfolgt mit einer definierten Zuordnung, an welcher Stelle der jeweiligen Bereitstellungsbahnen sich welches Gebinde befindet. Über eine entsprechende Zentralsteuerung kann der jeweilige Bedarf an den gewünschten bzw. bereits verbrauchten Gebinden ermittelt werden. Es können Vollgebinde gekauft und gegebenenfalls Leergebinde zurückgegeben werden. Eine Abrechung erfolgt über Kunden- oder Kreditkarten oder per Barzahlung an einem Automaten. Eine Bestellung kann an einem am Gebäude 1 angeordneten Panel, über das Internet oder in einem angeschlossenen Einkaufszentrum erfolgen.

Gleichzeitig wird das Leergut erfasst und in dem Leergutspeicher 6 in den richtigen Containern oder Speicherbahnen 61 gespeichert. In dem Steuersystem sind auch die Daten erfasst, wo welches Leergutgebinde befindlich ist.

Die Regelbediengeräte 20, 30 sind höhenverfahrbar und in Längs und Querrichtung verfahrbar, so dass grundsätzlich sämtliche Regalbahnen von den Regalbediengeräten 20. 30 angefahren werden können. Die Rollenbahnen können an das jeweils einzustellende Gebinde angepasst sein. Alternativ zu einer automatischen Verfahrbewegung des Ausgabetisches 12 kann dieser auch manuell herausgezogen werden. Durch die Anordnung der Antriebe in den Regalbediengeräten 20, 30 verringert sich der Wartungsaufwand und der Installationsaufwand. Reparaturen können schneller durchgeführt werden, da in den antriebslosen Speicherbahnen 4 nahezu keine Wartung notwendig ist. Aufgrund der geringen Technizität innerhalb der Speicherbahnen können diese enger übereinander und nebeneinander gebaut werden, was die Raumausnutzung optimiert.

Sowohl das Beladen als auch Entladen der Belieferungs- bzw. Entsorgungsfahrzeuge 7 kann automatisch erfolgen, es müssen keine Paletten vereinzelt oder gehandhabt werden. Aufwendige Greifer oder Handhabungsgeräte sind nicht notwendig.

## Patentansprüche

1. Gebindeabgabesystem mit auf mehreren Ebenen und nebeneinander angeordneten Bereitstellungsbahnen, an deren Enden verfahrbar angetriebene Regalbediengeräte angeordnet sind, die mit einer Steuereinrichtung verbunden sind und in die Bereitstellungsbahnen Gebinde aus einer Übernahmestation einstellen und aus den Bereitstellungsbahnen Gebinde auf Anforderung entnehmen und einer Ausgabestelle (8) zuführen, **dadurch gekennzeichnet, dass** eine Sensoreinrichtung (58) zur Erfassung der Körpergröße eines Kunden an dem Gebindeabgabesystem angeordnet ist und ein in der Höhe einstellbarer Ausgabetisch (12), auf dem das Gebinde dem Kunden zugeführt wird, mit einer Steuereinheit gekoppelt ist, die in Abhängigkeit von den Sensordaten den Ausgabetisch (12) in der Höhe einstellt.

2. Gebindeabgabesystem nach Anspruch 1, **dadurch gekennzeichnet, dass** die Sensoreinheit (58) als Ultraschallsensor ausgebildet ist.

3. Gebindeabgabesystem nach Anspruch 1 oder 2, **dadurch gekennzeichnet, dass** der Ausgabetisch (12) längsverschieblich angetrieben ausgebildet ist.

4. Gebindeabgabesystem nach einem der voranstehenden Ansprüche, **dadurch gekennzeichnet, dass** der Ausgabetisch (12) über einen Scherenmechanismus höheneinstellbar ist.

5. Gebindeabgabesystem nach einem der voranstehenden Ansprüche, **dadurch gekennzeichnet, dass** der Ausgabetisch (12) in seiner Neigung einstellbar ist.

6. Gebindeabgabesystem nach einem der voranstehenden Ansprüche, **dadurch gekennzeichnet, dass** das Gebindeabgabesystem in einem Gebäude (1) angeordnet ist, in dem eine Nische (13) ausgebildet ist, in der die Ausgabestelle (8) angeordnet ist.

7. Gebindeabgabesystem nach Anspruch 6, **dadurch gekennzeichnet, dass** eine Absperrvorrichtung (14), insbesondere ein Roll- oder Schiebetor zum Verschließen der Nische (13) bei Nichtgebrauch an dem Gebäude (1) angebracht ist.

8. Gebindeabgabesystem nach Anspruch 6 oder 7, **dadurch gekennzeichnet, dass** ein Bedienterminal (28) innerhalb der Nische (13) angeordnet ist.

9. Gebindeabgabesystem nach einem der Ansprüche 6 bis 8, **dadurch gekennzeichnet, dass** die Sensoreinrichtung (58) zur Erfassung der Körpergröße eines Kunden innerhalb der Nische (13) angeordnet ist.

10. Gebindeabgabesystem nach einem der Ansprüche 6 bis 9, **dadurch gekennzeichnet, dass** eine Sensoreinheit (48) zur Erfassung einer Anwesenheit einer Person oder eines Gegenstandes in der Nische (13) oder in einem Verfahrweg der Absperrvorrichtung (14) vorgesehen ist.

11. Gebindeabgabesystem nach einem der Ansprüche 6 bis 10, **dadurch gekennzeichnet, dass** eine Schleuseneinrichtung (127) dem Ausgabetisch (12) zugeordnet ist, die das Gebäude (1) gegen unbefugtes Eindringen sichert.

12. Gebindeabgabesystem nach einem der Ansprüche 6 bis 11, **dadurch gekennzeichnet, dass** das ein Verschlussschwert an einer Durchtrittsöffnung (38) des Ausgabetisches (12) durch das Gebäude (1) angeordnet ist.

13. Gebindeabgabesystem nach einem der voranstehenden Ansprüche, **dadurch gekennzeichnet, dass** das Regalbediengerät (20) mit dem Ausgabetisch (12) über einen Pufferspeicher (10) gekoppelt ist.

14. Gebindeabgabesystem nach einem der voranstehenden Ansprüche, **dadurch gekennzeichnet, dass** der Ausgabetisch (12) mit einer Rollbahn (122) ausgerüstet ist.

15. Gebindeabgabesystem nach einem der voranstehenden Ansprüche, **dadurch gekennzeichnet, dass** die Regalbediengeräte (20, 30) und der Ausgabetisch (12) zur Aufnahme mehrerer Gebinde eingerichtet sind.

16. Gebindeabgabesystem nach einem der voranstehenden Ansprüche, **dadurch gekennzeichnet, dass** eine Annahmeeinrichtung (18) für Rückgabegebinde vorgesehen ist, von der aus die Gebinde mit einer Transporteinrichtung (62) über das Regalbediengerät (30) in eine Sammel- oder Entsorgungsstation (51) eingestellt werden.
